(19) Europäisches Patentamt
European Patent Office
Office européen des brevets

(11) Veröffentlichungsnummer: **0 166 687**
**B1**

(12) # EUROPÄISCHE PATENTSCHRIFT

(45) Veröffentlichungstag der Patentschrift: **03.08.88**

(51) Int. Cl.⁴: **C 09 B 45/32,** D 06 P 1/10

(21) Anmeldenummer: **85810260.1**

(22) Anmeldetag: **06.06.85**

(54) **Eisenkomplexe von Azofarbstoffen aus Naphthylaminsulfonsäure, Resorcin und Nitroaminophenol.**

(30) Priorität: **12.06.84 CH 2836/84**

(43) Veröffentlichungstag der Anmeldung:
**02.01.86 Patentblatt 86/1**

(45) Bekanntmachung des Hinweises auf die Patenterteilung:
**03.08.88 Patentblatt 88/31**

(84) Benannte Vertragsstaaten:
**CH DE FR GB IT LI**

(56) Entgegenhaltungen:
**EP - A - 0 091 020**
**DE - C - 278 142**
**US - A - 2 117 707**
**US - A - 2 200 445**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Püntener, Alois, Dr., Pulverweg 13, CH-4310 Rheinfelden (CH)**

**EP 0 166 687 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der vorliegenden Erfindung sind Eisenkomplexe von Azofarbstoffen, welche erhältlich sind, indem man eine Naphthylaminsulfonsäure der Formel I diazotiert,

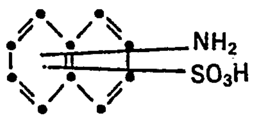

(I)

bei einem pH-Wert von 3 bis 7 mit Resorcin kuppelt, das Reaktionsprodukt anschliessend mit diazotiertem 4-Nitro-2-aminophenol alkalisch kuppelt und schliesslich mit einer Eisenverbindung metallisiert.

Aus der DE-C 278 142 sind bereits Azofarbstoffe aus Resorcin und zwei verschiedenen Diazokomponenten, jedoch keine entsprechenden Eisenkomplexe bekannt; die Kupplungsreihenfolge entspricht hierbei zum Teil der bei den erfindungsgemässen Farbstoffen verwendeten, jedoch finden die Kupplungen grundsätzlich in einem alkalischen Medium statt.

Aus der US-A 2 200 445 sind bereits Eisenkomplexe von Azofarbstoffen aus Resorcin und zwei verschiedenen Diazokomponenten bekannt. Gemäss den Angaben dieser Patentschrift ist die Reihenfolge der Kupplung beliebig, in den konkret beschriebenen Beispielen wird jedoch stets als erstes eine Diazokomponente mit komplexbildender Gruppe gekuppelt; die Kupplungen erfolgen zudem jeweils in einem alkalischen Medium.

Es wurde nun gefunden, dass überraschenderweise die Farbstoffe gemäss der vorliegenden Erfindung, bei denen zunächst die Naphthylaminsulfonsäure in einem leicht sauren Medium auf Resorcin und anschliessend 4-Nitro-2-aminophenol alkalisch auf das 1. Kupplungsprodukt gekuppelt werden, vorteilhafte Eigenschaften besitzen.

Geeignete Naphthylaminsulfonsäuren der Formel I für die Herstellung der erfindungsgemässen Farbstoffe sind z.B. 1-Naphthylamin-2-, -3-, -4-, -5-, -6-, -7- oder -8-sulfonsäure, 2-Naphthylamin-1-sulfonsäure oder vorzugsweise 2-Naphthylamin-5-, -7- oder -8-sulfonsäure und insbesondere 2-Naphthylamin-6-sulfonsäure.

Die Kupplungsreaktionen werden unter üblichen, an sich bekannten Bedingungen durchgeführt. Bei der Kupplung von Resorcin mit der diazotierten Naphthylaminsulfonsäure arbeitet man zweckmässigerweise in wässrigem Medium bei einem pH-Wert von 3 bis 7, vorzugsweise 4 bis 6, bei der Kupplung des erhaltenen Monoazofarbstoffes mit diazotiertem 4-Nitro-2-aminophenol bei einem pH-Wert von 7 bis 12, vorzugsweise 8 bis 10.

Pro Mol Resorcin setzt man 0,95 bis 1,25 Mol, vorzugsweise 1,0 bis 1,2 Mol Naphthylaminsulfonsäure ein und für die Kupplung mit dem gebildeten Monoazofarbstoff werden 0,9 bis 1,05 Mol, vorzugsweise 0,95 bis 1 Mol, 4-Nitro-2-aminophenol je Mol Resorcin eingesetzt.

Der erhaltene Farbstoff wird anschliessend, vorzugsweise ohne Zwischenisolierung, auf an sich bekannte Weise in wässrigem oder wässrigorganischem Milieu mit einer Eisenverbindung, z.B. Eisen-III-chlorid, -nitrat oder -sulfat metallisiert, vorzugsweise bei pH-Werten von 5 bis 7. Pro Mol Resorcin setzt man zweckmässig 0,5 bis 0,7 Mol, vorzugsweise 0,5 bis 0,6 Mol Eisenverbindung ein.

Die nach den obigen Verfahren erhältlichen neuen Eisenkomplexfarbstoffe werden in Form ihrer Salze, insbesondere Alkali-, vor allem Natrium- oder Kaliumsalze, oder auch Ammoniumsalze oder Salze von organischen Aminen mit positiv geladenem Stickstoffatom isoliert und eignen sich zum Färben und Bedrucken verschiedener Stoffe, gegebenenfalls in Gegenwart eines Egalisierhilfsmittels, vor allem aber zum Färben und Bedrucken stickstoffhaltiger Materialien, wie Seide, Polyurethanen, Wolle, Polyamid und insbesondere von Pelzen oder Leder, wobei alle Ledersorten geeignet sind, z.B. Chromleder, nachgegerbtes Leder oder Velourleder von Ziege, Rind und Schwein.

Man erhält braune Färbungen mit guten Echtheiten.

Das nachfolgende Beispiel dient der Erläuterung der Erfindung. Teile bedeuten Gewichtsteile und Prozente Gewichtsprozente. Die Temperaturen sind in Grad Celsius angegeben.

Beispiel

In 100 Teile Wasser werden 11 Teile Resorcin eingetragen und mit 26,8 Teilen 2-Naphthylamin-6-sulfonsäure, die nach bekannter Methode mit Säure und Nitrit diazotiert wurde, versetzt. Durch Zugabe von 2-molarer Natronlauge wird der pH-Wert leicht sauer gestellt. Nach Beendigung der ersten Kupplung werden 15,4 Teile 2-Amino-4-nitrophenol, die ebenfalls nach bekannter Methode diazotiert wurden, zugegeben. Dabei wird mit 2-molarer Natronlauge der pH-Wert leicht alkalisch gehalten. Nach Beendigung der zweiten Kupplung wird der erhaltene Farbstoff mit 50 ml einer 1-molaren Eisen-III-chlorid-Lösung 6 Stunden bei 80° und mit 2-molarer Natronlauge neutral bis schwach sauer gehaltenem pH-Wert metallisiert. Anschliessend wird pro 100 ml Lösung mit 25 Teilen einer 1:1-Mischung aus Kaliumchlorid und Natriumchlorid ausgesalzen, filtriert und getrocknet. Das erhaltene dunkle Pulver färbt Leder in einem rotbraunen Farbton mit guten Echtheiten.

Arbeitet man wie vorstehend beschrieben, verwendet jedoch anstelle von 2-Naphthylamin-6-sulfonsäure gleiche Mengen 1-Naphthylamin-4-sulfonsäure oder 2-Naphthylamin-5-sulfonsäure so erhält man ebenfalls Farbstoffe, welche Leder in braunem Farbton mit guten Echtheiten färben.

Färbevorschrift für Leder

100 Teile Bekleidungsvelourleder werden bei 50° in einer Lösung von 1000 Teilen Wasser und 2 Teilen 24%igem Ammoniak während 2 Stunden

aufgewalkt und anschliessend bei 60° in einer Lösung von 1000 Teilen Wasser, 2 Teilen 24%igem Ammoniak und 3 Teilen Farbstoff des Beispiels während 1 Stunde gefärbt. Hierauf gibt man eine Lösung von 40 Teilen Wasser und 4 Teilen 85%iger Ameisensäure zu und färbt noch weitere 30 Minuten. Dann werden die Leder gut gespült und gegebenenfalls noch mit 2 Teilen eines Dicyandiaminoformaldehydkondensationsproduktes während 30 Minuten bei 50° behandelt. Man erhält eine braune Färbung mit guten Echtheiten.

## Patentansprüche

1. Eisenkomplexe von Azofarbstoffen, erhältlich, indem man eine Naphthylaminsulfonsäure der Formel I diazotiert,

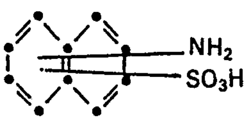

(I)

bei einem pH-Wert von 3 bis 7 mit Resorcin kuppelt, das Reaktionsprodukt anschliessend mit diazotiertem 4-Nitro-2-aminophenol alkalisch kuppelt und schliesslich mit einer Eisenverbindung metallisiert.

2. Eisenkomplexfarbstoffe gemäss Anspruch 1, dadurch gekennzeichnet, dass man als Naphthylaminsulfonsäure 2-Naphthylamin-5-, -7-, -8- oder -6-sulfonsäure werden.

3. Eisenkomplexfarbstoffe gemäss Anspruch 2, dadurch gekennzeichnet, dass man 2-Naphthylamin-6-sulfonsäure verwendet.

4. Eisenkomplexfarbstoffe gemäss einem der Ansprüche 1 bis 3, dadurch gekennzeichnet, dass man 1,0 bis 1,2 Mol Naphthylaminsulfonsäure pro Mol Resorcin verwendet.

5. Eisenkomplexfarbstoffe gemäss einem der Ansprüche 1 bis 4, dadurch gekennzeichnet, dass man 0,95 bis 1 Mol 4-Nitro-2-aminophenol je Mol Resorcin verwendet.

6. Eisenkomplexfarbstoffe gemäss einem der Ansprüche 1 bis 5, dadurch gekennzeichnet, dass man 0,5 bis 0,6 Mol Eisenverbindung pro Mol Resorcin verwendet.

7. Verfahren zur Herstellung von Eisenkomplexfarbstoffen, dadurch gekennzeichnet, dass man eine Naphthylaminsulfonsäure der Formel I diazotiert,

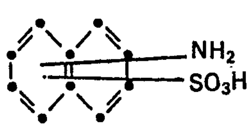

(I)

mit Resorcin bei einem pH-Wert von 3 bis 7 kuppelt, das Reaktionsprodukt anschliessend mit diazotiertem 4-Nitro-2-aminophenol alkalisch kuppelt und schliesslich mit einer Eisenverbindung metallisiert.

8. Verfahren gemäss Anspruch 7, dadurch gekennzeichnet, dass man die erste Kupplung bei einem pH-Wert von 4 bis 6 und die zweite Kupplung bei einem pH-Wert von 8 bis 10 vornimmt.

9. Verwendung der Farbstoffe gemäss den Ansprüchen 1 bis 6 zum Färben von Leder.

## Revendications

1. Complexes de fer de colorants azoiques, que l'on peut préparer en diazotant un acide naphtylaminesulfonique de formule I

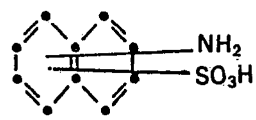

(I)

en le copulant à un pH de 3 à 7 sur du résorcinol, puis en copulant à pH alcalin le produit de réaction sur du 4-nitro-2-aminophénol diazoté, et enfin en effectuant une métallation à l'aide d'un composé du fer.

2. Colorants à complexe de fer selon la revendication 1, caractérisés en ce qu'on utilise en tant qu'acide naphtylamine-sulfonique l'acide 2-naphtylamine-5-, -7-, -8- ou -6-sulfonique.

3. Colorants à complexe de fer selon la revendication 2, caractérisés en ce qu'on utilise l'acide 2-naphtylamine-6-sulfonique.

4. Colorants à complexe de fer selon l'une des revendications 1 à 3, caractérisés en ce qu'on utilise de 1,0 à 1,2 mole d'acide naphtylaminesulfonique par mole de résorcinol.

5. Colorants à complexe de fer selon l'une des revendications 1 à 4, caractérisés en ce qu'on utilise de 0,95 à 1 mole de 4-nitro-2-aminophénol par mole de résorcinol.

6. Colorants à complexe de fer selon l'une des revendications 1 à 5, caractérisés en ce qu'on utilise de 0,5 à 0,6 mole d'un composé du fer par mole de résorcinol.

7. Procédé de préparation de colorants à complexe de fer, caractérisé en ce qu'on diazote un acide naphtylaminesulfonique de formule I

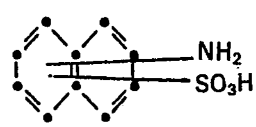

(I)

on le copule sur du résorcinol à un pH de 3 à 7, puis on copule à pH alcalin le produit de réaction sur du 4-nitro-2-aminophénol diazoté, puis on effectue une métallation à l'aide d'un composé du fer.

8. Procédé selon la revendication 7, caractérisé en ce que la première copulation est effectuée à un pH de 4 à 6 et la deuxième copulation à un pH de 8 à 10.

9. Utilisation des colorants selon les revendications 1 à 6 pour la teinture du cuir.

## Claims

1. An iron complex of an azo dye which is obtainable by diazotising a naphthylaminesulfonic acid of formula I

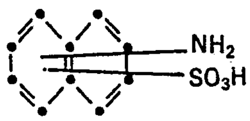

(I)

coupling the product with resorcinol at a pH of 3 to 7, subsequently coupling the reaction product in alkaline medium with diazotised 4-nitro-2-aminophenol and finally metallising with an iron compound.

2. An iron complex dye according to claim 1, which comprises the use of 2-naphthylamine-5-, -7-, -8-, or -6-sulfonic acid as naphthylaminesulfonic acid.

3. An iron complex dye according to claim 2, which comprises the use of 2-naphthylamine-6-sulfonic acid.

4. An iron complex dye according to any one of claims 1 to 3, which comprises the use of 1.0 to 1.2 mol of naphthylaminesulfonic acid per mol of resorcinol.

5. An iron complex dye according to any one of claims 1 to 4, which comprises the use of 0.95 to 1 mol of 4-nitro-2-aminophenol per mol of resorcinol.

6. An iron complex dye according to any one of claims 1 to 5, which comprises the use of 0.5 to 0.6 mol of iron compound per mol of resorcinol.

7. A process for the preparation of an iron complex dye, which process comprises diazotising a naphthylaminesulfonic acid of formula I

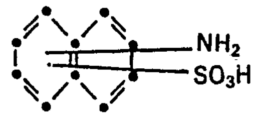

(I)

coupling the product with resorcinol at a pH of 3 to 7, subsequently coupling the reaction product in alkaline medium with diazotised 4-nitro-2-aminophenol and finally metallising with an iron compound.

8. A process according to claim 7, wherein the first coupling is carried out at a pH of 4 to 6 and the second coupling at a pH of 8 to 10.

9. Use of a dye according to any one of claims 1 to 6 for dying leather.